Europäisches Patentamt

European Patent Office

Office européen des brevets

(19)

(11) Numéro de publication : **0 434 583 A1**

# (12) DEMANDE DE BREVET EUROPEEN

(21) Numéro de dépôt : 90430023.3

(22) Date de dépôt : 18.12.90

(51) Int. Cl.⁵ : **G03B 21/132, G03B 27/62**

(30) Priorité : 22.12.89 FR 8917400

(43) Date de publication de la demande :
26.06.91 Bulletin 91/26

(84) Etats contractants désignés :
AT BE CH DE DK ES GB GR IT LI LU NL SE

(71) Demandeur : **Genieis, Jean**
**Quartier St Clair Lieu dit Peigros**
**F-83640 Saint Zacharie (FR)**

(72) Inventeur : **Genieis, Jean**
**Quartier St Clair Lieu dit Peigros**
**F-83640 Saint Zacharie (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

(54) **Dispositifs pour alimenter automatiquement un projecteur d'images.**

(57)    L'invention a pour objet des dispositifs pour alimenter automatiquement un projecteur d'images.

Un dispositif (112) selon l'invention est associé à un projecteur (115), qui comporte une plate-forme horizontale (117) sur laquelle on amène l'une après l'autre des feuilles de documents, dont on désire projeter une image sur un écran. Le dispositif comporte deux cassettes amovibles (1, 2) équipées chacune de leviers (19, 60) portés par un arbre (20, 61) actionné par un électroaimant (21, 62). Au-dessus de l'extrémité avant de chaque cassette se trouvent deux arbres transversaux (26, 27 et 66, 67) portant des poulies de renvoi (30, 32, 69, 70), sur lesquelles passent des courroies (24, 64) qui entraînent le document supérieur. Le dispositif comporte une plaque horizontale (18) qui est positionnée dans l'alignement de la plate-forme (117) du projecteur.

Une application est la projection d'images pendant l'exposé d'un conférencier.

FIG.2

COUPE A.A

EP 0 434 583 A1

# DISPOSITIFS POUR ALIMENTER AUTOMATIQUEMENT UN PROJECTEUR D'IMAGES

## DESCRIPTION

La présente invention a pour objet des dispositifs pour alimenter automatiquement un projecteur d'images.

Le secteur technique de l'invention est celui de la construction des accessoires de projecteurs d'images.

On connaît des projecteurs portables dits rétroprojecteurs qui comportent un boîtier que l'on pose sur une table et qui comportent une plate-forme horizontale et transparente sur laquelle on pose, une après l'autre, des feuilles, généralement transparentes, sur lesquelles des dessins ou des informations sont inscrits, dont l'appareil projette une image agrandie sur un écran. De tels projecteurs sont utilisés couramment par des conférenciers pour projeter des documents pendant un exposé.

Le processus habituel consiste en ce que le conférencier ou un opérateur place manuellement l'un après l'autre des documents à projeter sur la plate-forme du projecteur.

Chaque document transparent est rangé dans une pochette de protection et les documents sont rangés dans un ordre déterminé dans un classeur.

La manipulation des documents prend du temps, détériore l'état des documents transparents et contribue à l'émission d'images floues à cause des traces de doigt.

Suivant ce processus manuel, le conférencier doit chercher le document à projeter dans la pochette de protection et ranger le document précédent.

Si le conférencier désire projeter une deuxième fois un document qu'il a projeté précédemment, il lui faut du temps pour retrouver celui-ci.

La demande de brevet FR. A. 2.557.986 (Eric LALLIER) décrit un dispositif pour alimenter un projecteur au moyen d'un film qui est enroulé sur une bobine.

La publication FR. A. 2.418.945 (Inger LINDQUIST) décrit un dispositif pour alimenter un projecteur qui comporte un magasin que l'on déplace verticalement.

L'objectif de la présente invention est de procurer un dispositif destiné à être associé à un projecteur d'images, notamment à un rétroprojecteur portatif, qui nécessite seulement d'appuyer sur un bouton pour qu'il prélève une feuille de document dans une cassette et l'amène automatiquement sur la plate-forme du projecteur, puis la ramène automatiquement dans une cassette lorsqu'on appuie sur un autre bouton, sans que personne n'ait à toucher la feuille de document.

Un dispositif selon l'invention est associé à un projecteur d'images qui comporte une plate-forme horizontale sur laquelle les feuilles de documents à projeter doivent être placées l'une après l'autre.

L'objectif de l'invention est atteint au moyen d'un dispositif qui comporte :
- une cassette supérieure et une cassette inférieure superposées et parallèles, pouvant contenir chacune une pile de feuilles, chaque cassette étant équipée de moyens, commandés électriquement, pour soulever la pile de feuilles contenue dans la cassette ;
- des moyens motorisés à double sens de marche qui sont situés au-dessus de l'extrémité avant de chaque cassette pour entraîner une feuille hors de ladite cassette et pour ramener une feuille dans ladite cassette ;
- une plaque horizontale fixe qui est positionnée dans le prolongement de ladite plate-forme du projecteur et qui est équipée de moyens d'entraînement motorisés, à double sens de marche, qui sont situés au-dessus de ladite plaque et qui se prolongent au-dessus de ladite plate-forme ;
- et une plaque d'aiguillage motorisée, dont le bord arrière est fixé sur un axe d'articulation transversal, situé légèrement en avant du bord avant de la cassette supérieure, laquelle plaque d'aiguillage occupe normalement une première position où son bord avant est situé légèrement au-dessus de ladite plaque horizontale fixe, de sorte qu'une feuille venant de ladite plaque fixe passe au-dessous de la plaque d'aiguillage et va vers la cassette inférieure et peut occuper une deuxième position où son bord avant pénètre dans des ouvertures de ladite plaque fixe, de sorte qu'une feuille venant de ladite plaque fixe s'engage sur ladite plaque d'aiguillage et va vers la cassette supérieure.

Avantageusement, les cassettes sont amovibles et elles sont engagées sur des glissières qui sont fixées à deux flasques latéraux du bâti.

Selon un mode de réalisation préférentiel, le fond de chaque cassette comporte des ouvertures, situées à proximité du bord avant et chaque cassette est équipée de leviers, qui sont situés au-dessous desdites ouvertures et qui sont montés sur un axe transversal, actionné par un électro-aimant.

Selon un mode de réalisation préférentiel, un dispositif selon l'invention comporte, au-dessus de l'extrémité avant de chaque cassette, deux arbres transversaux qui portent des poulies de renvoi, sur lesquelles passent des courroies sans fin, destinées à entraîner lesdites feuilles et l'un des deux arbres est entraîné en rotation dans les deux sens par un moteur électrique.

L'invention a pour résultat de nouveaux dispositifs qui sont associés aux projecteurs d'images et qui permettent d'alimenter automatiquement ceux-ci en feuilles de documents, dont on désire projeter les images sur un écran.

Les dispositifs selon l'invention facilitent le travail des utilisateurs de tout type de projecteur, comportant une plate-forme horizontale. Ils procurent un processus automatique de changement de document. Il permettent de positionner chaque document selon deux positions différentes.

En marche avant, ils permettent d'extraire un document de l'une ou l'autre des deux cassettes et de le transporter et le positionner automatiquement sur la plate-forme du projecteur.

En marche arrière, ils permettent de retirer le document posé sur la plate-forme du projecteur, de le transporter automatiquement vers l'une ou l'autre des deux cassettes et de le ranger dans celle-ci.

Pendant un exposé, un conférencier peut ainsi faire revenir plusieurs fois un même document vers le projecteur.

Avantageusement les boutons qui commandent le début de chaque cycle d'opérations sont placés sur un boîtier de télécommande par infrarouges ou par ultrasons, de sorte que le conférencier a une grande liberté de mouvements.

Après avoir été enlevées de l'appareil, les cassettes amovibles peuvent être insérées dans un fourreau pour transporter ou pour ranger les documents.

Un dispositif selon l'invention supprime l'utilisation de masques ou de documents transparents que l'on superpose pour faire apparaître les étapes successives d'un processus. Il suffit de préparer des documents sur chacun desquels apparaît un dessin complet pour chaque étape.

La description suivante se réfère aux dessins annexés qui représentent, sans aucun caractère limitatif, un exemple de réalisation d'un dispositif selon l'invention.

La figure 1 représente une vue de dessus du dispositif sans le projecteur.

La figure 2 est une coupe verticale selon AA de la figure 1 et du projecteur qui représente la phase pendant laquelle une feuille est extraite de la cassette supérieure.

La figure 3 est une vue de dessus d'une cassette.

La figure 4 est une coupe verticale selon IV-IV de la figure 3.

La figure 5 est une coupe verticale analogue à la figure 2 qui représente l'extraction d'un document de la cassette inférieure.

La figure 6 est une coupe verticale analogue à la figure 2 qui représente le retour d'un document vers la cassette supérieure.

La figure 7 est un organigramme des opérations pour extraire un document de la cassette supérieure et pour le ramener vers celle-ci ou vers la cassette inférieure.

La figure 8 est un organigramme des opérations pour extraire un document de la cassette inférieure et pour le ramener vers celle-ci ou vers la cassette supérieure.

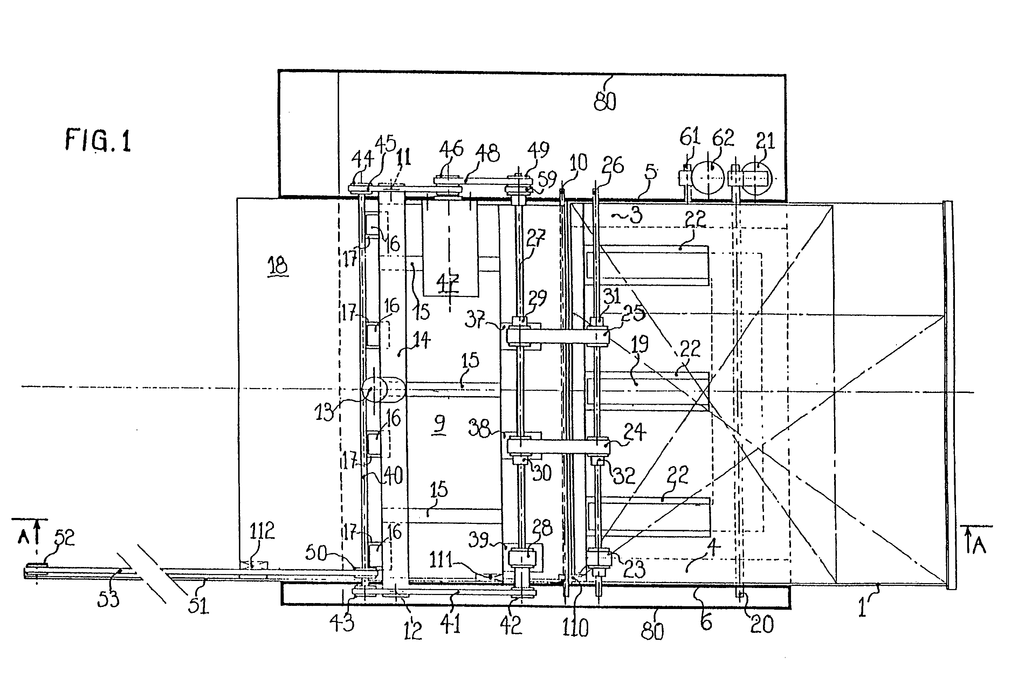

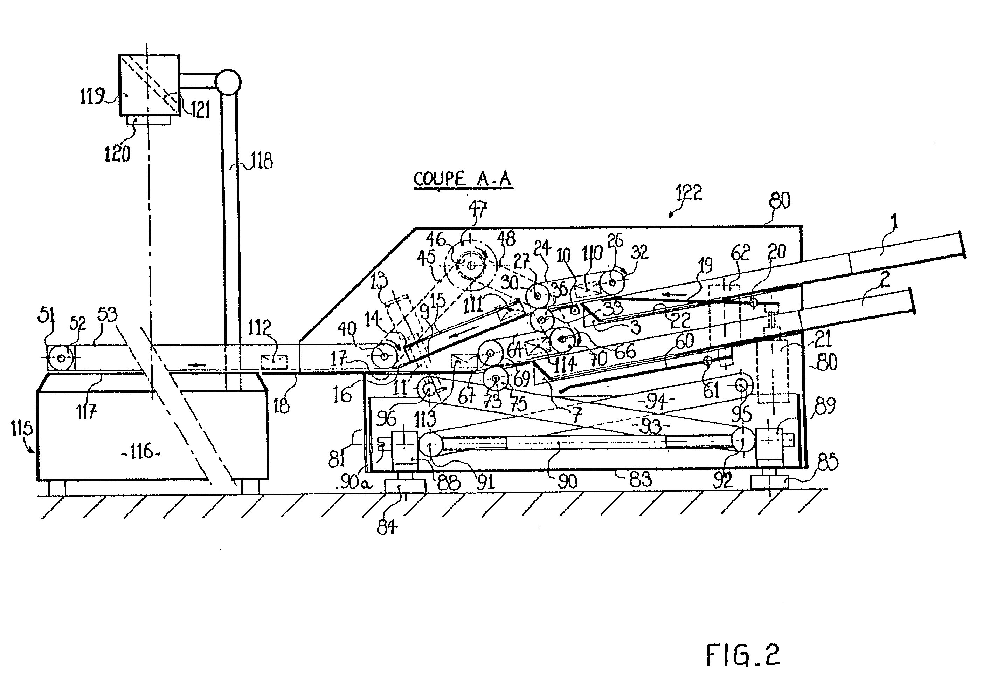

Les figures 1 et 2 représentent un dispositif qui est associé à un projecteur d'images 115 qui est par exemple un rétroprojecteur portatif permettant à un conférencier de projeter sur un écran des images de documents qui sont des textes ou des dessins inscrits sur des feuilles généralement transparentes.

Le rétroprojecteur 115 comporte un boîtier portatif 116 qui est posé sur une table ou tout autre support. Ce boîtier contient par exemple une source lumineuse et une lentille de Fresnel. La face supérieure du boîtier constitue une plate-forme transparente 117 sur laquelle on dépose l'une après l'autre les feuilles de document, sur lesquelles la lentille de Fresnel concentre la lumière.

Le boîtier 116 est équipé d'une potence 118 qui supporte un petit boîtier 119 qui contient un objectif 120 qui forme une image du document placé sur la plate-forme et un miroir 121, qui dévie les rayons lumineux vers un écran.

Un dispositif 122 selon l'invention est destiné à être associé à un projecteur 115 pour alimenter automatiquement celui-ci en feuilles de documents.

Un dispositif selon l'invention comporte deux cassettes identiques, superposées et parallèles, une cassette supérieure 1 et une cassette inférieure 2. Ces cassettes sont des boîtes carrées ou rectangulaires ouvertes à la partie supérieure, dans chacune desquelles on peut empiler des feuilles de documents.

Ces cassettes sont insérées sur deux glissières, par exemple pour la cassette 1 deux glissières 3 et 4, fixées respectivement sur deux flasques latéraux 5 et 6.

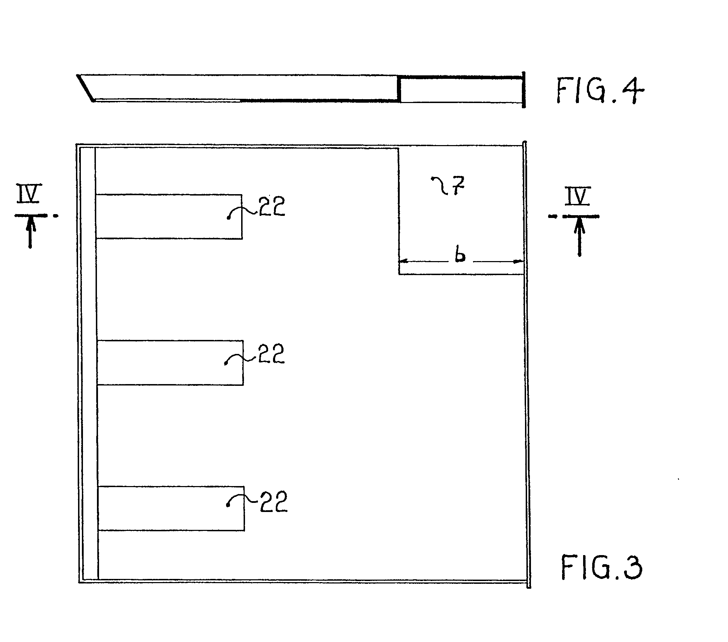

La figure 3 est une vue de dessus d'un mode de réalisation préférentiel d'une cassette et la figure 4 une coupe selon IV-IV de la figure 3. On voit sur ces figures que le fond de chaque cassette comporte plusieurs ouvertures, par exemple trois ouvertures rectangulaires 22, situées à proximité du bord avant de la cassette.

Ces ouvertures servent au passage de doigts de relevage des documents comme on l'expliquera ci-après. Le bord avant de chaque cassette est légèrement incliné vers l'avant en montant pour faciliter l'extraction des feuilles hors de la cassette.

La figure 3 représente une cassette carrée dont le côté est légèrement supérieur au plus grand côté des feuilles de document.

Dans un des angles situés le long du bord arrière, le fond de la cassette comporte une partie carrée 7 surélevée, dont le dessus se trouve au niveau des bords supérieurs de la cassette.

Cette partie surélevée a un côté b qui est égal à la différence entre le plus grand côté et le plus petit côté des feuilles de documents, ce qui permet de placer celles-ci dans une même pile contenue dans la cassette avec leur grand côté transversal ou longitudinal.

Un dispositif selon l'invention comporte un moyen d'aiguillage des documents situé en avant de l'extrémité avant de la cassette supérieure, c'est-à-dire du côté de celle-ci située vers le projecteur.

Selon un mode de réalisation préférentiel, ce moyen d'aiguillage est constitué par une plaque pivotante 9.

Le bord arrière de cette plaque est parallèle au bord avant de la cassette supérieure et situé légèrement en avant de celui-ci et au même niveau. Ce bord arrière et monté sur un axe transversal 10, de sorte que lorsque la plaque pivote autour de cet axe, le bord arrière de la plaque reste sensiblement à la même place.

La plaque 9 est pliée. Elle comporte une partie arrière sensiblement parallèle au fond des cassettes et une partie avant qui est inclinée vers le bas.

L'axe d'articulation 10 est supporté par les flasques latéraux 5 et 6. Deux ressorts 11 et 12, situés de part et d'autre du bord avant de la plaque 9, repoussent celle-ci vers le haut.

Un électroaimant 13, monté sur une barre transversale 14, repousse la plaque 9 vers le bas lorsqu'il est excité. L'action de l'électroaimant 13 est antagoniste de l'action du ressort 11. La plaque 9 comporte, le long de son bord avant, des encoches qui délimitent entre elles des créneaux 16. Plusieurs brosses 15, par exemple trois brosses, sont disposées au-dessus de la plaque 9, parallèlement à celle-ci.

Les poils de ces brosses maintiennent les feuilles de document appliquées contre la plaque 9.

Un dispositif selon l'invention comporte une plaque fixe 18, qui comporte une partie avant horizontale, qui est placée dans l'alignement de la plate-forme 117 du rétroprojecteur.

Cette partie de plaque horizontale comporte des ouvertures 17 situées au-dessous des créneaux 16 de la plaque pivotante 9.

Lorsque l'électroaimant 13 est excité, l'extrémité avant de la plaque 9 bascule vers le bas et les créneaux 16 s'engagent dans les ouvertures 17, de sorte qu'une feuille venant de la plate-forme 117 suit la plaque 9 et est dirigé vers la cassette supérieure. Lorsque l'électroaimant 13 n'est plus excité, le ressort 11 repousse la plaque 9 vers le haut, de sorte que l'extrémité avant de la plaque 9 se trouve placée au-dessus de la plaque fixe 18, en étant séparée de celle-ci par un espace libre, et une feuille venant de la plate-forme 117 passe au-dessous de la plaque 9 et est dirigée vers la cassette inférieure.

Les cassettes supérieure et inférieure sont équipées chacune d'un moyen motorisé, commandé électriquement, qui permet de soulever une pile de feuilles situées dans la cassette.

Selon un mode de réalisation préférentiel, la cassette supérieure est équipée d'un bras, solidaire d'un axe transversal 20, lequel bras porte trois leviers 19 qui se placent respectivement sous chacune des trois ouvertures 22, situées dans le fond de la cassette. L'axe 70 est actionné par un électroaimant 21 qui agit sur un levier solidaire de l'axe.

Lorsqu'on excite l'électroaimant 21, les trois leviers 19 passent à travers les trois ouvertures 22 et soulèvent le paquet de feuilles placées dans la cassette.

De la même façon, la cassette inférieure est équipée d'un axe transversal 61 portant trois leviers 60 qui pénètrent dans des ouvertures découpées dans le fond de la cassette 2. L'axe 61 est actionné par un électroaimant 62.

Au-dessus de l'extrémité avant de la cassette inférieure se trouve un arbre transversal 26 monté dans des paliers portés par les flasques latéraux 5 et 6.

L'arbre 26 porte un galet 23 et deux poulies de renvoi 31, 32, sur lesquelles passent des courroies sans fin 24 et 25.

Un deuxième arbre transversal 27 est placé en avant de l'arbre 26. L'arbre 27 porte un galet 28 et deux poulies de renvoi 29, 30, sur lesquelles passent respectivement les courroies 24 et 25,

Le galet 28 et les poulies de renvoi 29 et 30 sont disposées respectivement au-dessus de trois ouvertures 37, 38 et 39 qui sont découpées dans la plaque pivotante 9.

Un autre arbre transversal 33 est placé au-dessous de l'arbre 27 et cet arbre 33 porte trois galets presseurs venant s'appuyer respectivement contre le galet 28, et contre les deux courroies 24 et 25 à travers les ouvertures 37, 38 et 39. Un seul de ces galets 35 est visible sur la figure 3.

L'arbre 27 est un arbre menant qui est entraîné en rotation par un moteur électrique 47 à double sens de marche, par l'intermédiaire d'une transmission comportant deux poulies de renvoi 46, 49 et une courroie sans fin 48.

Le dispositif comporte un quatrième arbre transversal 40 qui est disposé au-dessus de la plaque fixe 18.

L'arbre 40 porte au voisinage de l'une de ses extrémités une poulie de renvoi 50, sur laquelle passe une courroie sans fin 53, qui passe sur une deuxième poulie 52 portée par un support 51 qui est fixé à l'un des flasques latéraux 6. Le brin inférieur de la courroie 53 glisse au-dessus de la partie horizontale de la plaque fixe 18 et au-dessus de la plate-forme 117, de sorte que la courroie 53 entraîne dans un sens ou dans l'autre une feuille posée sur ces surfaces horizontales.

La figure 1 représente un mode de réalisation comportant une seule courroie 53, qui est située dans le prolongement du flasque 6, situé du côté opposé aux bossages surélevés 7 des cassettes, de sorte que la courroie 53 entraîne les documents dans les deux positions possibles.

En variante, le dispositif pourrait comporter deux courroies situées respectivement dans le prolongement de chacun des flasques latéraux 5 et 6.

L'arbre 40 est relié à l'arbre menant 27 par une courroie crantée 41 passant sur deux poulies de renvoi 42 et 43 montées respectivement sur l'arbre 40 et sur l'arbre 27.

L'entraînement de l'arbre 40 est réalisé par une transmission comportant une poulie 44 montée sur l'arbre 40, une double poulie 46 montée sur l'arbre moteur et une courroie crantée 45.

Pour assurer un bon contact de la courroie 53 avec la plate-forme 117 du rétroprojecteur, une brosse peut être montée sur le support 51, dont les poils appuient sur le brin inférieur de la courroie 53.

La cassette inférieure 2 est équipée d'un dispositif de transport des documents identique à celui qui équipe la cassette supérieure.

Ce dispositif comporte un premier arbre mené 66 qui porte des poulies de renvoi 70, sur lesquelles passent des courroies 64 qui passent sur d'autres poulies 69 portées par un deuxième arbre transversal 67, au-dessus duquel se trouve un troisième arbre transversal 73, qui porte des galets 75 placés dans des ouvertures 78 situées dans un prolongement de la plaque fixe 18 qui est parallèle à la cassette inférieure.

Un dispositif selon l'invention comporte plusieurs capteurs destinés à détecter la présence d'une feuille de document. Il comporte un premier capteur 110 disposé au-dessus de l'extrémité avant de la cassette supérieure, un deuxième capteur 111 disposé au-dessus de la plaque pivotante 9, un troisième capteur 112 disposé au-dessus de l'extrémité avant de la plaque fixe 118, un quatrième capteur 113 disposé au-dessus de l'extrémité arrière de la plaque fixe 18 et un cinquième capteur 114 disposé au-dessus de l'extrémité avant de la cassette inférieure.

Ces capteurs peuvent être par exemple des capteurs photo-électriques ou des microcontacts électriques ou des capteurs capacitifs.

L'ensemble composé par les flasques 5 et 6, les arbres transversaux, les plaques 9 et 18 et les cassettes forme un étage supérieur qui est porté par les flasques 5 et 6, reliés entre eux par deux plaques transversales 80 et 81.

Cet étage supérieur est supporté par deux tiges transversales 95 et 96, relevables par un dispositif en ciseaux formé de deux biellettes entrecroisées 93 et 94, qui sont articulées sur deux noix mobiles 91, 92, qui sont des écrous montés sur une tige filetée 90, comportant deux filetages à pas inversé.

La tige 90 est montée sur deux paliers 88 et 89 qui font partie d'un étage inférieur 82, 83, monté sur deux pieds 84 et 85.

Une extrémité de la tige 90 comporte une encoche 90a afin de faire tourner la tige avec un tournevis, ce qui permet de faire varier le niveau de l'étage supérieur pour amener la plaque horizontale 18 dans le plan de la plate-forme 117 du rétroprojecteur.

Un dispositif selon l'invention est équipé d'un ensemble de relais, ou bien d'une unité centrale électronique qui commande automatiquement la succession des opérations nécessaires pour amener une feuille de document de la cassette 1 ou de la cassette 2 vers le rétroprojecteur et inversement.

Le dispositif comporte un clavier sur lequel se trouvent deux boutons de commande, sur lesquels le conférencier appuie pour commander le prélèvement d'une feuille respectivement dans la cassette 1 et dans la cassette 2 et deux autres boutons qui commandent respectivement le retour du document vers la cassette 1 et vers la cassette 2. Avantageusement, ce clavier fait partie d'un boîtier portatif de télécommande par infrarouges ou par ultrasons.

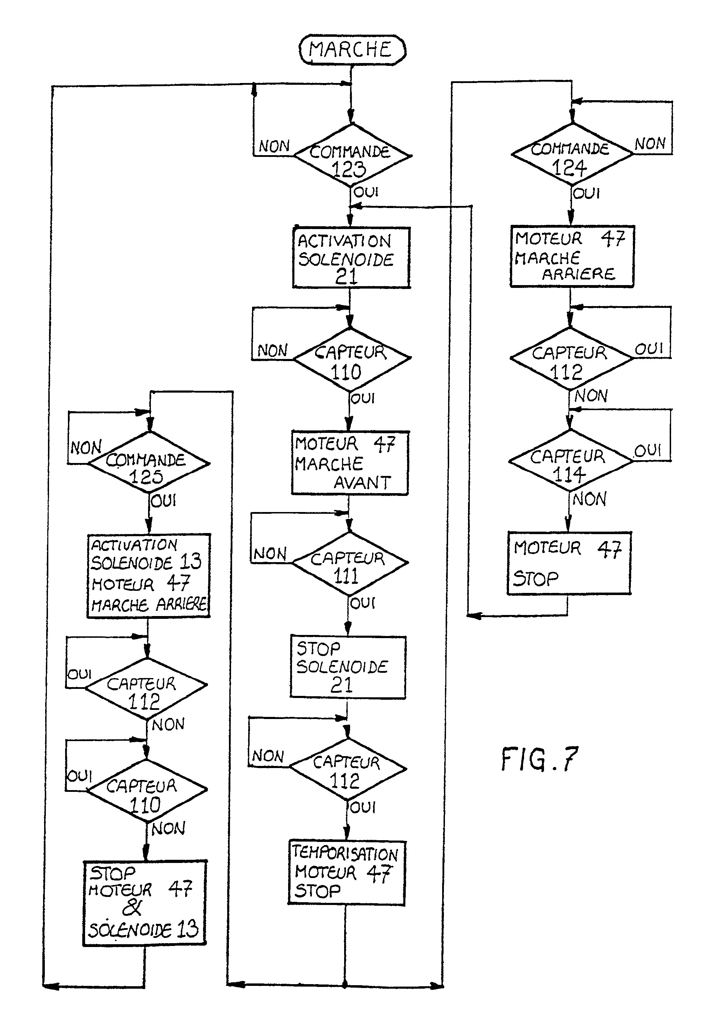

La figure 7 est un diagramme qui représente la suite des opérations pour prélever une feuille dans la cassette 1 et pour la ramener soit vers la cassette 1, soit vers la cassette 2. L'opérateur appuie d'abord sur un bouton marche qui met l'appareil sous tension. Il appuie ensuite sur un bouton 123 pour prélever la feuille qui se trouve sur le dessus de la pile dans la cassette 1. L'actionnement du bouton 123 commande une suite d'opérations qui vont amener automatiquement cette feuille sur la plate-forme 117 du rétroprojecteur.

Le solenoïde de l'électroaimant 21 est excité et celui-ci commande la montée des leviers 19 qui soulèvent la pile de documents. Lorsque le capteur 110 détecte la présence d'une feuille, il commande la mise en marche avant du moteur 47. La feuille supérieure est entraînée vers l'avant quelle que soit sa position dans la cassette pour les courroies 24 et 25 et elle s'engage entre les courroies et les galets 35.

Dès que le capteur 111 détecte l'arrière de la feuille, il commande l'arrêt de l'alimentation du solenoïde 21.

Les leviers 19 et la pile de documents redescendent dans la cassette 1, de sorte qu'un seul document est prélevé. Lorsque le capteur 112 détecte le passage de la feuille, il commande automatiquement l'arrêt du moteur 47 après une petite temporisation pour permettre que le document se place sur la plate-forme 147. La projection du document sur l'écran a lieu. Le trajet du document est représenté par des flèches sur la figure 2.

Lorsque l'opérateur juge que la projection a assez duré, il appuie sur un bouton 124 s'il désire que le document revienne vers la cassette 2 ou sur un bouton 125 s'il désire que le document revienne vers la cassette 1.

La partie droite de la figure 7 représente la suite des opérations qui ramènent le document vers la cassette 2. L'actionnement du bouton 124 commande la mise en marche arrière du moteur 47.

Lorsque les deux capteurs 112 et 114 ne détectent plus la présence du document, ils commandent l'arrêt du moteur 47.

La partie gauche de la figure 7 représente le retour du document vers la cassette 1. Lorsque l'opérateur actionne le bouton 125, le solenoïde 13 est excité. La plaque d'aiguillage 9 est repoussée vers le bas et les créneaux 16 s'engagent dans les ouvertures 17 de la plaque 18.

En même temps le moteur 47 est mis en marche arrière. Le document remonte le long de la plaque 9 vers la cassette 1. Lorsque le capteur 112 et le capteur 110 ne détectent plus la présence du document, ils commandent automatiquement l'arrêt du moteur 47 et l'arrêt de l'alimentation du solenoïde 13.

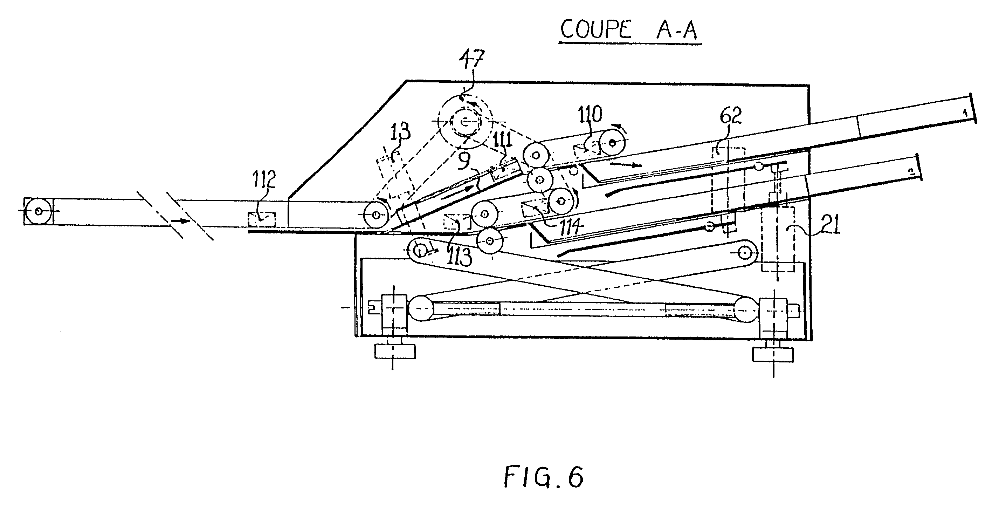

La figure 6 représente la position de la plaque 9 pendant le retour du document vers la cassette 1. Le trajet du document est représenté par des flèches.

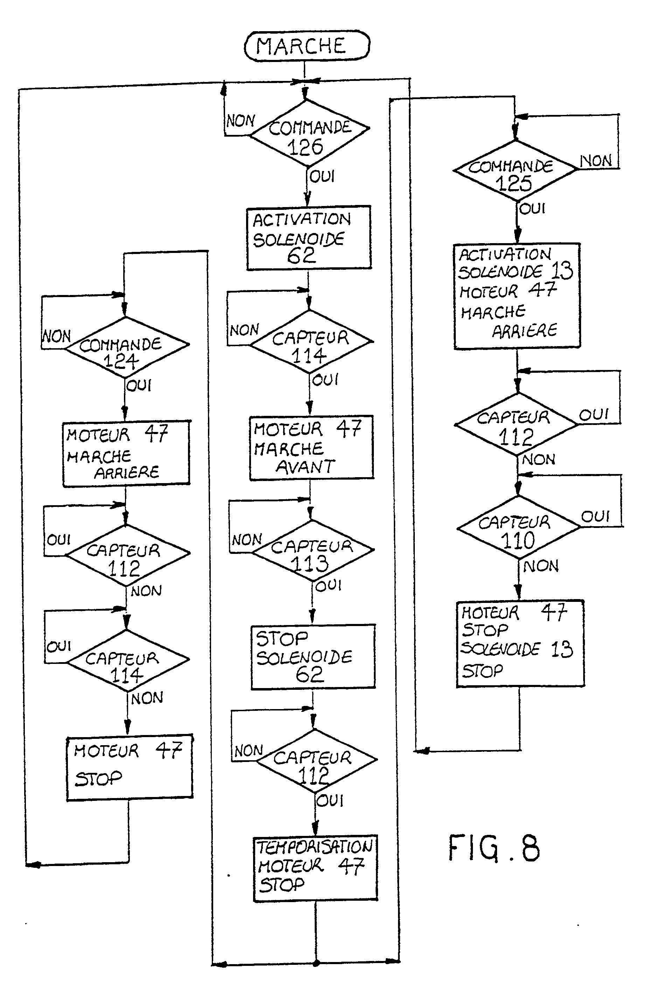

La figure 8 est un diagramme analogue à celui de la figure 7, qui représente les opérations pour prélever un document dans la cassette 2 et le ramener soit vers la cassette 1, soit vers la cassette 2.

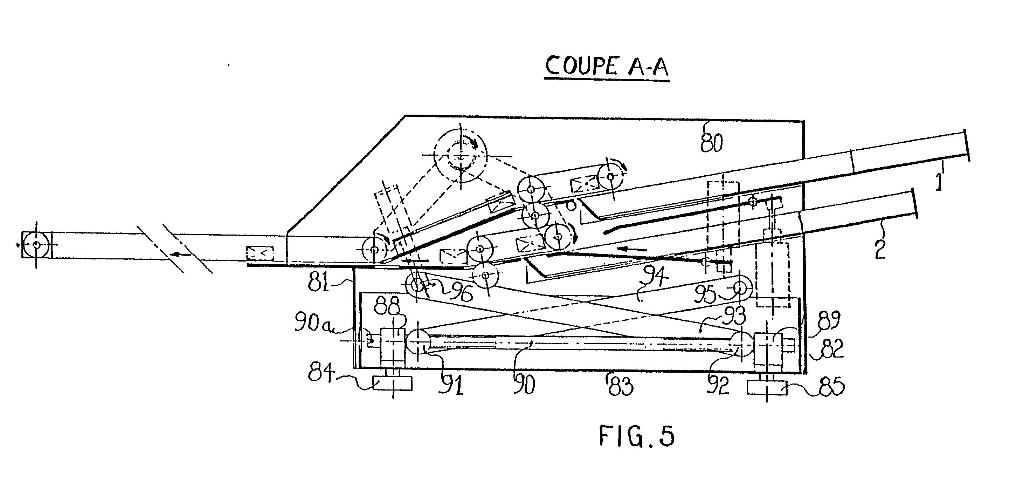

L'opérateur appuie sur un bouton 126 pour commander le prélèvement du document situé sur le dessus de la pile contenue dans la cassette 2. Cet actionnement fait démarrer une suite d'opérations qui amènent automatiquement le document sur la plateforme 117. Le trajet du document est représenté par des flèches sur la figure 5.

La partie droite de la figure 8 représente la suite des opérations qui sont initiées par un actionnement du bouton 125 pour ramener le document vers la cassette 1. La partie gauche de la figure 8 représente la suite des opérations qui sont initiées par un actionnement du bouton 124 pour ramener le document vers la cassette 2.

On voit qu'un dispositif selon l'invention permet à un conférencier de projeter des documents un par un simplement en appuyant chaque fois sur un bouton.

Avantageusement les boutons de commande sont placés sur un boîtier de télécommande portatif à infrarouges ou à ultrasons, ce qui donne au conférencier une grande liberté de mouvements.

## Revendications

1. Dispositif pour alimenter automatiquement un projecteur d'images (115) comportant une plate-forme horizontale (117) sur laquelle des feuilles de documents à projeter doivent être placées l'une après l'autre, caractérisé en ce qu'il comporte :
   – une cassette supérieure (1) et une cassette inférieure (2) superposées et parallèles, pouvant contenir chacune une pile de feuilles, chaque cassette étant équipée de moyens (19, 21, 60, 62), commandés électriquement pour soulever la pile de feuilles contenue dans la cassette ;
   – des moyens motorisés à double sens de marche (24, 25) qui sont situés au-dessus de l'extrémité avant de chaque cassette pour entraîner une feuille hors de ladite cassette et pour ramener une feuille dans ladite cassette;
   – une plaque horizontale fixe (18) qui est positionnée dans le prolongement de ladite plate-forme (117) du projecteur et qui est équipée de moyens d'entraînement motorisés (53) à double sens de marche, qui sont situés au-dessus de ladite plaque (18) et qui se prolongent au-dessus de ladite plate-forme (117) ;
   – et une plaque d'aiguillage (9) motorisée, dont le bord arrière est fixé sur un axe d'articulation transversal (10), situé légèrement en avant du bord avant de la cassette supérieure, laquelle plaque d'aiguillage (9) occupe normalement une première position où son bord avant est situé légèrement au-dessus de ladite plaque horizontale fixe (18), de sorte qu'une feuille venant de ladite plaque fixe passe au-dessous de la plaque d'aiguillage et va vers la cassette inférieure (2) et peut occuper une deuxième position où son bord avant pénètre dans des ouvertures (17) de ladite plaque fixe (18)), de sorte qu'une feuille venant de ladite plaque fixe s'engage sur ladite plaque d'aiguillage (9) et va vers la cassette supérieure (1).

2. Dispositif selon la revendication 1, caractérisé en ce que lesdites cassettes (1, 2) sont amovibles et sont engagées sur des glissières (3, 4) fixées à deux flasques latéraux (5, 6) du bâti.

3. Dispositif selon l'une quelconque des revendications 1 et 2, caractérisé en ce que le fond de chaque cassette comporte des ouvertures (22), situées à proximité du bord avant et chaque cassette est équipée de leviers (19, 60), qui sont situés au-dessous desdites ouvertures (22) et qui sont montés sur un axe transversal (20, 61), actionné par un électro-aimant (21, 62).

4. Dispositif selon l'une quelconque des revendications 1 à 3, caractérisé en ce qu'il comporte, au-dessus de l'extrémité avant de chaque cassette, deux arbres transversaux (26, 27, 66, 67), qui portent des poulies de renvoi (29, 30, 31, 32), sur lesquelles passent des courroies sans fin (24, 25), destinées à entraîner lesdites feuilles et l'un des deux arbres est entraîné en rotation dans les deux sens par un moteur électrique (47).

5. Dispositif selon la revendication 4, caractérisé en ce que le bord avant de chaque cassette est prolongé vers l'avant par une plaque parallèle au fond de la cassette, laquelle plaque comporte des ouvertures (37, 38, 39), dans lesquelles passent des galets presseurs (35) portés par un troisième arbre transversal (33).

6. Dispositif selon l'une quelconque des revendications 2 à 5, caractérisé en ce que l'un au moins des flasques latéraux (4, 5) est prolongé vers l'avant par un bras (51), qui passe au-dessus de ladite plate-forme (117) et qui porte à son extrémité une poulie (52), sur laquelle passe une courroie sans fin (53), dont le brin inférieur s'étend au-dessus de ladite plaque horizontale (18) et au-dessus de ladite plate-forme (117).

7. Dispositif selon l'une quelconque des revendications 1 à 6, caractérisé en ce qu'il comporte des capteurs de présence d'une feuille (110, 114) disposés au dessus de l'extrémité avant de chaque cassette.

8. Dispositif selon la revendication 7, caractérisé en ce qu'il comporte, en outre, un capteur (112) de présence d'une feuille situé au-dessus de ladite plaque horizontale fixe (18).

9. Dispositif selon l'une quelconque des revendications 1 à 8, caractérisé en ce que ladite plaque horizontale fixe (18) est montée sur un bâti supporté par deux tiges transversales (95, 96), qui sont supportées par deux biellettes croisées en ciseau (94, 93), lesquelles biellettes sont articulées sur deux voies (91, 92) vissées sur une tige filetée (90) comportant deux filetages de sens inverse, laquelle tige filetée comporte une encoche (90a) permettant de la faire tourner avec un tournevis pour amener ladite plaque fixe (18) au niveau de ladite plate-forme (117) du projecteur.

10. Dispositif selon la revendication 1, caractérisé en ce que chaque cassette a la forme d'un carré dont le côté est légèrement supérieur au plus grand côté des feuilles de documents et le fond de chaque cassette comporte, dans un des angles situé le long du bord arrière, une partie carrée surélevée (7), dont le côté (b) est égal à la différence entre le plus grand côté et le plus petit côté des feuilles de documents, de sorte que celles-ci peuvent être placées en long ou en travers dans une même pile.

FIG.1

COUPE A-A

FIG.2

EP 0 434 583 A1

FIG.4

FIG.3

IV

IV

7

b

22

22

22

COUPE A-A

FIG.5

FIG.6

EP 0 434 583 A1

FIG. 7

FIG.8

EP 0 434 583 A1

Office européen
des brevets

**RAPPORT DE RECHERCHE EUROPEENNE**

Numero de la demande

EP 90 43 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4756616 (B.K.MIN ET AL.)<br>* colonne 3, ligne 50 - colonne 5, ligne 47 *<br>* abrégé; figures *<br>--- | 1-4, 7 | G03B21/132<br>G03B27/62 |
| A | EP-A-254317 (CANON KABUSHIKI KAISHA)<br>* colonne 8, ligne 37 - colonne 9, ligne 16;<br>figure 1 *<br>--- | 1 | |
| A | PATENT ABSTRACTS OF JAPAN<br>vol. 11, no. 340 (P-634)(2787) 07 novembre 1987,<br>& JP-A-62 123437 (NEC CORP) 04 juin 1987,<br>* le document en entier *<br>--- | 1 | |
| D,A | FR-A-2418945 (I.LINDQVIST)<br>* page 2, ligne 18 - page 3, ligne 31; figures<br>1, 2 *<br>------ | 1 | |

| | | | DOMAINES TECHNIQUES RECHERCHES (Int. Cl.5 ) |
|---|---|---|---|
| | | | G03B<br>G03G |

Le présent rapport a été établi pour toutes les revendications

| Lieu de la recherche | Date d'achèvement de la recherche | Examinateur |
|---|---|---|
| LA HAYE | 27 MARS 1991 | HERYET C.D. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)

15